# EUROPÄISCHE PATENTSCHRIFT

(11) **EP 2 673 477 B1**
(45) Veröffentlichungstag und Bekanntmachung des Hinweises auf die Patenterteilung: **26.04.2017**
(21) Anmeldenummer: 12703308.2
(22) Anmeldetag: 08.02.2012
(51) Int. Cl.: F01D 25/14, F02C 6/12, F02B 37/18, F04D 29/40

(54) **ABGASTURBOLADER MIT GEKÜHLTEM TURBINENGEHÄUSE**
TURBOCHARGER WITH COOLED TURBINE HOUSING
TURBOCOMPRESSEUR MUNI D'UN CARTER DE TURBINE REFROIDI

(30) Priorität: 10.02.2011 DE 102011003907
(43) Veröffentlichungstag der Anmeldung: 18.12.2013
(73) Patentinhaber: Continental Automotive GmbH, 30165 Hannover (DE)
(72) Erfinder: BOGNER, Mathias, 93073 Neutraubling (DE); KÖMPEL, Ralph-Maurice, 68159 Mannheim (DE); HILLER, Marc, 67294 Morschheim (DE)
(86) Internationale Anmeldenummer: PCT/EP2012/052113
(87) Internationale Veröffentlichungsnummer: WO 2012/107479

(56) Entgegenhaltungen:
- WO-A1-2009/106159
- WO-A2-2009/019153
- DE-A1- 10 025 500
- DE-U1- 7 627 763
- DE-U1- 20 311 703
- US-A- 4 756 673

## Beschreibung

Die Erfindung betrifft einen Abgasturbolader, der ein gekühltes Turbinengehäuse aufweist.

Abgasturbolader dienen dazu, den Wirkungsgrad eines Verbrennungsmotors zu verbessern und damit dessen Leistung zu steigern. Der Abgasturbolader weist hierzu eine Turbine mit einem Turbinenrad und einen Verdichter mit einem Verdichterrad auf, wobei die beiden Laufräder auf einer gemeinsamen Welle angeordnet sind. Das Turbinenrad wird hierbei über einen Abgasmassenstrom einer angeschlossenen Brennkraftmaschine angetrieben und treibt wiederum das Verdichterrad an. Der Verdichter verdichtet angesaugte Frischluft und führt diese der Brennkraftmaschine zu. Die gemeinsame Welle ist in einem Lagergehäuse des Turboladers gelagert. Des Weiteren ist das Turbinenrad der Turbine in einem Turbinengehäuse angeordnet und das Verdichterrad des Verdichters in einem Verdichtergehäuse.

Ein solcher Abgasturbolader hat im Betrieb an der Brennkraftmaschine bzw. einem angeschlossenen Motor verschiedenste Anforderungen zu erfüllen. Eine dieser Anforderungen besteht darin, die hohen Temperaturen aufzunehmen, die beispielsweise aufgrund des heißen Abgasmassenstroms in dem Turboladergehäuse entstehen können.

Die übliche Konstruktion eines Abgasturboladers sieht dabei einzelne Gehäuse vor, die jeweils aus einem an die dort herrschende Temperatur angepassten Werkstoff bestehen. Dabei ist das Verdichtergehäuse üblicherweise aus Aluminium, während das Lagergehäuse aus Grauguss ist, wobei das Lagergehäuse zusätzlich auch wassergekühlt ausgeführt sein kann. Das Turbinengehäuse besteht im Allgemeinen aufgrund der hohen Temperaturen, die in diesem Bereich herrschen, aus hochtemperaturbeständigen Nickellegierungen. Aufgrund der angepassten, unterschiedlichen Werkstoffe für die einzelnen Gehäuse sind diese Gehäuse als separate Teile ausgebildet, die miteinander verbunden sind und dabei außerdem gegeneinander abgedichtet sein müssen.

Hochtemperaturbeständige Nickellegierungen stellen einen erheblichen Kostenfaktor dar. So nimmt das Turbinengehäuse aufgrund der hohen Werkstoffkosten den größten Einzelposten an den Gesamtkosten eines Abgasturboladers ein.

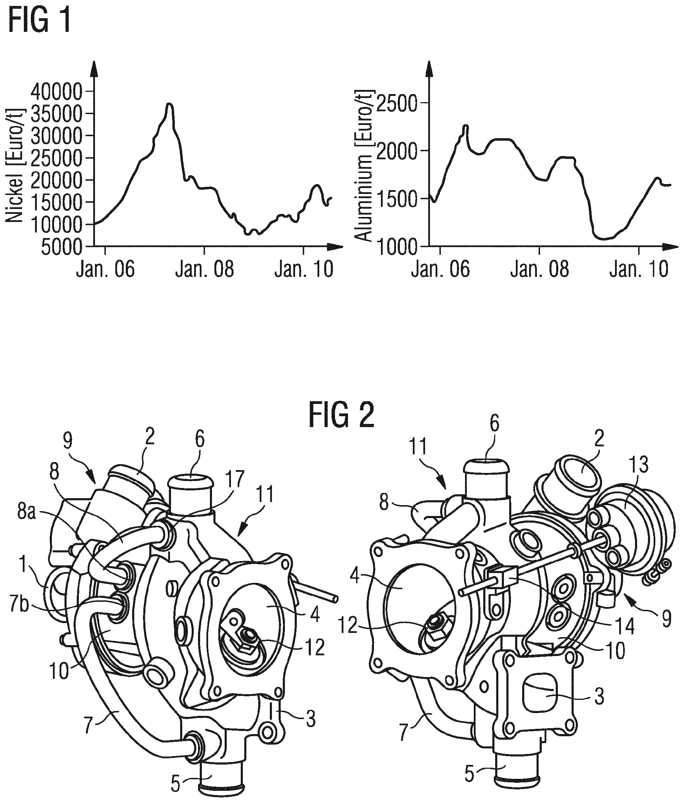

Die Figur 1 zeigt die Preisentwicklung für Nickel und Aluminium in den letzten fünf Jahren. Eine Verwendung billigerer Gusswerkstoffe für das Turbinengehäuse, wie beispielsweise Aluminiumlegierungen, würde die Gesamtkosten eines Abgasturboladers erheblich senken. Diese Werkstoffe sind allerdings weit weniger temperaturbeständig als Nickellegierungen.

Aus der WO 2010/039590 A2 ist ein Abgassystem bekannt, welches ein flüssigkeitsgekühltes, nicht eisenhaltiges Gehäuse aufweist, welches mit einem Eingang, einem Ausgang, einem zwischen dem Eingang und dem Ausgang angeordneten Abgaspfad und eine oder mehrere flüssigkeitsgekühlte Passagen aufweist. Des Weiteren ist im Abgaspfad des Gehäuses ein Abgasflussisolierstück vorgesehen, um das Abgas derart durch das Gehäuse zu leiten, dass der Hitzetransfer vom Abgas auf das Gehäuse begrenzt ist. Dieses Isolierstück ist aus wenigstens einem eisenhaltigen Material oder einem keramischen Material zusammengesetzt.

Aus der US 2009/0101087 A1 ist ein Supercharger bekannt, welcher in einem Gehäuse einen Kühlwassermantel aufweist, der sich um eine Mittelaussparung des Gehäuses erstreckt und eine Passage aufweist, innerhalb derer das Kühlwasser in Umfangsrichtung um mehr als 360° um die Mittelaussparung fließt.

Aus der DE 203 11 703 U1 ist ein Turbinengehäuse für einen Turbolader-Verbrennungsmotor für Marineanwendungen bekannt, welches einstückig mit einem Abgaskrümmer ausgebildet ist und eine sowohl die Turbine als auch den Abgaskrümmer umgebende Kühleinrichtung aufweist.

Aus der US 4, 756, 673 ist ein Turbolader bekannt, bei welchem die Turbine und der Verdichter thermisch voneinander isoliert sind. Zu diesem Zweck ist ein zwischen dem Turbinengehäuse und dem Verdichtergehäuse angeordnetes, wassergekühltes weiteres Gehäuse vorgesehen.

Aus der WO 2009/106159 A1 ist ein aus einem Turbinengehäuse und einem Lagergehäuse eines Turboladers bestehendes gekühltes Gehäuse bekannt. Dieses Gehäuse weist einen Kühlmantel auf, der aus einem oder mehreren Schalenelementen gebildet ist, die außen an dem Gehäuse befestigt sind und mit diesem einen Hohlraum bilden, in welchen ein Kühlmittel einführbar ist.

Aus der DE 100 25 500 A1 ist eine Brennkraftmaschine mit einer Abgasleitung und mit einem von Abgas, das durch die Abgasleitung abgeführt wird, durchströmbaren Abgaswärmetauscher bekannt. In die Abgasleitung ist des Weiteren ein Abgasturbolader mit einem Turbinengehäuse und einem darin drehbaren Turbinenrad eingesetzt. Das Turbinengehäuse ist wenigstens teilweise mit einer zusätzlichen Wand ausgebildet und weist einen Hohlraum auf, der mit einem Einlassanschluss und einem Auslassanschluss zum Einleiten und Ausleiten von wärmeaufnehmender Kühlflüssigkeit versehen ist.

Aus der DE 76 27 763 U1 ist ein Abgasturbolader bekannt, der ein Turbinenrad und ein wassergekühltes Gehäuse aufweist. Zwischen dem Turbinenrad und dem Gehäuse ist ein in dem Gehäuse zentriertes, kreisringförmiges Einsatzstück aus warmfesten Stahl radial um das Turbinenrad angeordnet.

Aus der WO 2009/019153 A2 ist ein Turbolader bekannt, der ein Turbinengehäuse und ein Lagergehäuse aufweist, wobei das Turbinengehäuse und das Lagergehäuse mit einer gemeinsamen Kühlungseinrichtung versehen sind.

Die Aufgabe der Erfindung besteht darin, einen Abgasturbolader anzugeben, dessen Turbinengehäuse auch ohne eine Verwendung von Nickellegierungen den im Betrieb auftretenden hohen Temperaturen standhält.

Diese Aufgabe wird durch einen Abgasturbolader mit den im Anspruch 1 angegebenen Merkmalen gelöst. Vorteilhafte Ausgestaltungen und Weiterbildungen der Erfindung sind in den abhängigen Ansprüchen angegeben.

Gemäß der vorliegenden Erfindung enthält ein Abgasturbolader ein Turbinengehäuse, ein Lagergehäuse und ein Verdichtergehäuse, wobei das Turbinengehäuse einen Kühlmitteleingang, einen im Inneren des Turbinengehäuses angeordneten Kühlmantel und einen Kühlmittelausgang aufweist, wobei der Kühlmantel in zwei Teilbereiche aufgeteilt ist.

Bei einem derartigen Abgasturbolader erfolgt eine aktive Kühlung des Turbinengehäuses unter Verwendung von rohrförmigen Verbindungen, die innerhalb des Turbinengehäuses die zwei Teilbereiche des Kühlmantels miteinander verbinden.

Durch die Aufteilung des Kühlmantels in zwei Teilbereiche wird in vorteilhafter Weise ermöglicht, die Strömungsführung des Kühlmittels innerhalb des Turbinengehäuses zu optimieren und dabei sicherzustellen, dass thermisch besonders hoch belastete Bestandteile des Turbinengehäuses in verbesserter Weise gekühlt werden. Insbesondere kann durch die beanspruchte Aufteilung des Kühlmantels in mehrere Teilbereiche sichergestellt werden, dass in thermischer Hinsicht besonders kritische Bereiche, zu denen der Bereich der Spirale vor dem Turbinenrad und der Abströmbereich des Turbinenrades gehören, in allen Betriebspunkten des zugehörigen Verbrennungsmotors ausreichend gekühlt werden. Weist der Abgasturbolader ein Wastegate auf, dann kann mittels der vorliegenden Erfindung sichergestellt werden, dass auch der Wastegate-Kanal und der Bereich um den Wastegate-Sitz in verbesserter Weise gekühlt werden.

Ein weiterer Vorteil der Erfindung besteht darin, dass sich innerhalb des Kühlmantels gebildete Gase nicht im Turbinengehäuse ansammeln können, sondern sowohl während des Motorbetriebes als auch im Stillstand des Verbrennungsmotors das Turbinengehäuse verlassen können.

Weitere vorteilhafte Eigenschaften der Erfindung ergeben sich aus deren beispielhafter Erläuterung anhand der Figuren 2 - 5. Es zeigt
- Figur 2: perspektivische Skizzen zur Veranschaulichung eines Abgasturboladers, der ein Wastegate und ein wassergekühltes Turbinengehäuse aufweist,
- Figur 3: eine perspektivische Skizze eines wassergekühlten Turbinengehäuses als bearbeitetes Fertigteil,
- Figur 4: eine Skizze zur Veranschaulichung der Aufteilung des Kühlmantels in zwei Teilbereiche,
- Figur 5: Skizzen zur Veranschaulichung des zweigeteilten Kühlmantels eines Turbinengehäuses mit integrierten rohrförmigen Verbindungen zwischen den beiden Teilbereichen und
- Figur 6: Skizzen zur Veranschaulichung von Kühlmittelstromführungsmöglichkeiten innerhalb des Turbinengehäuses.

Nachfolgend wird ein Abgasturbolader beschrieben, der ein Turbinengehäuse, ein Lagergehäuse und ein Verdichtergehäuse aufweist, wobei das Turbinengehäuse einen Kühlmitteleingang, einen im Inneren des Turbinengehäuses angeordneten Kühlmantel und einen Kühlmittelausgang aufweist und der Kühlmantel in zwei Teilbereiche aufgeteilt ist.

So ist aus der Figur 2 ersichtlich, dass der dort gezeigte Abgasturbolader ein Verdichtergehäuse 9, ein Lagergehäuse 10 und ein Turbinengehäuse 11 aufweist.

Im Verdichtergehäuse 9 ist in üblicher Weise ein auf einer gemeinsamen Welle angeordnetes Verdichterrad angeordnet. Im Turbinengehäuse 11 ist in üblicher Weise auf der gemeinsamen Welle ein Turbinenrad angeordnet. Die gemeinsame Welle ist im Lagergehäuse 10, welches zwischen dem Verdichtergehäuse 9 und dem Turbinengehäuse 11 positioniert ist, gelagert. Im Betrieb des Abgasturboladers wird das Turbinenrad über einen Abgasmassenstrom einer angeschlossenen Brennkraftmaschine angetrieben und treibt seinerseits über die gemeinsame Welle das Verdichterrad an. Der Verdichter verdichtet angesaugte Frischluft und führt diese der Brennkraftmaschine zu.

Das Verdichtergehäuse 9 weist einen Frischlufteingang 1, durch welchen Frischluft aus der Umgebung in den Abgasturbolader eingesaugt wird, und einen Frischluftausgang 2 auf, durch welchen verdichtete Frischluft zur Weiterleitung an die Brennkraftmaschine ausgegeben wird. Des Weiteren ist das Verdichtergehäuse 9 mit einem aus der Figur 2 nicht ersichtlichen Schubumluftventil versehen. Dieses Schubumluftventil hat im Betrieb des Abgasturboladers die Aufgabe, im Falle eines negativen Lastsprungs einen Bypass um den Verdichter zu öffnen, so dass überschüssiger Ladedruck abgeblasen werden kann.

Das Lagergehäuse 10 weist einen Kühlmitteleingang 7b und einen Kühlmittelausgang 8a auf. Durch den Kühlmitteleingang 7b tritt im Betrieb des Abgasturboladers Kühlmittel in das Lagergehäuse 10 ein. Durch den Kühlmittelausgang 8a wird im Betrieb des Abgasturboladers Kühlmittel aus dem Lagergehäuse 10 ausgegeben. Der Kühlmitteleingang 7b des Lagergehäuses 10 ist mit einem Schlauch 7 verbunden, durch welchen Kühlmittel vom Turbinengehäuse 11 zum Lagergehäuse 10 transportiert wird. Der Kühlmittelausgang 8a des Lagergehäuses 10 ist mit einem Schlauch 8 verbunden, durch welchen das aus dem Lagergehäuse 10 ausgegebenen Kühlmittel zum Turbinengehäuse 11 transportiert wird.

Das Turbinengehäuse 11 weist einen Abgaseingang 3, einen Abgasausgang 4, einen Kühlmitteleingang 5, einen Kühlmittelausgang 6, ein Wastegate 12, einen Kühlmittelabzweigausgang 16 und einen Kühlmittelrückführungseingang 17 auf. Der Abgaseingang 3 ist mit einem Abgasausgang der Brennkraftmaschine, zu welcher der Abgasturbolader gehört, verbunden, so dass im Betrieb durch den Abgaseingang 3 das heiße Abgas der Brennkraftmaschine in den Innenbereich des Turbinengehäuses 11 gelangt. Dort wird es durch eine vor dem Turbinenrad angeordnete Spirale geführt und treibt dann das Turbinenrad an. Dieses wiederum treibt über die gemeinsame Welle das im Verdichtergehäuse angeordnete Verdichterrad an. Durch den Abgasausgang 4, der mit dem Katalysator des Kraftfahrzeugs verbunden ist, tritt das Abgas wieder aus dem Turbinengehäuse 11 aus.

Durch den Kühlmitteleingang 5, der an der Unterseite des Turbinengehäuses 11 vorgesehen ist, tritt im Betrieb des Abgasturboladers Kühlmittel ein, beispielsweise Kühlwasser. Dieses Kühlmittel wird im Inneren des Turbinengehäuses unter Verwendung von rohrförmigen Verbindungen auf zwei Teilbereiche eines Kühlmantels aufgeteilt, fließt durch diese Teilbereiche, wird unter Verwendung weiterer rohrförmiger Verbindungen wieder zusammengeführt und wird schließlich durch den auf der Oberseite des Turbinengehäuses 11 vorgesehenen Kühlmittelausgang 6 wieder aus dem Turbinengehäuse 11 ausgegeben. Durch dieses Kühlmittel wird das Turbinengehäuse 11, welches im Betrieb des Abgasturboladers aufgrund seiner Positionierung im heißen Abgasstrom hohen Temperaturen ausgesetzt ist, aktiv gekühlt. Durch die Anordnung des Kühlmitteleingangs 5 auf der Unterseite des Turbinengehäuses und die Anordnung des Kühlmittelausgangs 6 auf der Oberseite des Turbinengehäuses wird in vorteilhafter Weise eine automatische Entgasung des Kühlmittels erreicht. Es wird verhindert, dass sich Gasblasen, die den Kühlmittelstrom behindern könnten, innerhalb des Turbinengehäuses festsetzen. Zur Regelung der Leistung des Turbinenrades ist in das Turbinengehäuse 11 ein Wastegate 12 integriert. Dieses weist eine Wastegate-Klappe auf, die je nach momentanem Bedarf mehr oder weniger weit geöffnet werden kann, um einen gewünschten Teil des heißen Abgases unter Umgehung des Turbinenrades direkt dem Abgasausgang 4 zuzuleiten. Die Einstellung der Öffnungsposition der Wastegate-Klappe erfolgt durch einen Regler 14, der außen am Turbinengehäuse 11 befestigt ist und über eine Koppelstange mit einer Druckdose 13 verbunden ist.
Des Weiteren weist das in der Figur 2 gezeigte Turbinengehäuse 11 einen Kühlmittelabzweigausgang 16 auf, welcher mit dem Schlauch 7 verbunden ist. An diesem Kühlmittelabzweigausgang 16 wird innerhalb des Turbinengehäuses 11 abgezweigtes Kühlmittel bereitgestellt und durch den Schlauch 7 über den Kühlmitteleingang 7b des Lagergehäuses 10 in das Lagergehäuse transportiert. Ferner weist das in der Figur 2 gezeigte Turbinengehäuse 11 einen Kühlmittelrückführungseingang 17 auf, welcher mit dem Schlauch 8 verbunden ist. Durch diesen Kühlmittelrückführungseingang 17 wird das vom Lagergehäuse 10 ausgegebene Kühlmittel in das Turbinengehäuse 11 zurückgeführt.

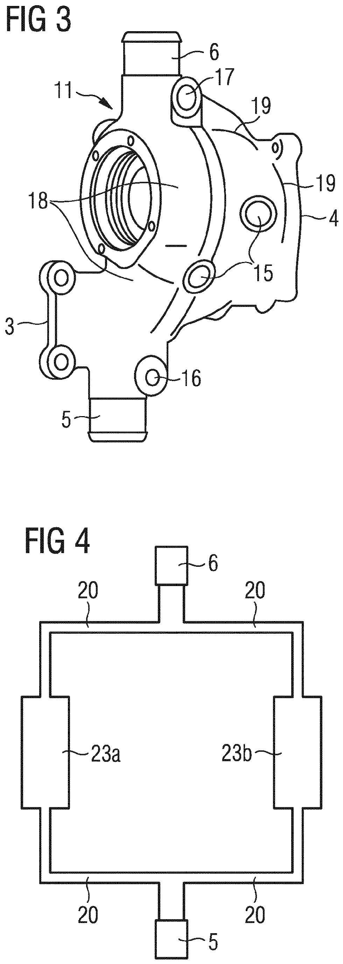

Die Figur 3 zeigt eine perspektivische Skizze eines Turbinengehäuses als bearbeitetes Fertigteil. Aus dieser Figur 3 sind wiederum der auf der Unterseite des Turbinengehäuses 11 angeordnete Kühlmitteleingang 5 und der auf der Oberseite des Turbinengehäuses 11 angeordnete Kühlmittelausgang 6 ersichtlich. Diese Positionierung des Kühlmitteleingangs 5 und des Kühlmittelausgangs 6 entspricht der späteren Einbausituation des Abgasturboladers. Dadurch ist sichergestellt, dass im Betrieb die Kühlmittelzufuhr des Turbinengehäuses stets von unten und die Kühlmittelabfuhr an der Oberseite des Turbinengehäuses erfolgt.

Des Weiteren zeigt die Figur 3 den Kühlmittelabzweigausgang 16 und den Kühlmittelrückführungseingang 17 des Turbinengehäuses, wobei über den Kühlmittelausgang 16 und den in der Figur 2 gezeigten Schlauch 7 Kühlmittel an das Lagergehäuse 10 ausgegeben wird und über den Kühlmittelrückführungseingang 17 und den in der Figur 2 gezeigten Schlauch 8 vom Lagergehäuse 10 ausgegebenes Kühlmittel zum Turbinengehäuse 11 zurückgeführt wird. Die Kühlmittelversorgung des Lagergehäuses erfolgt demnach vollständig über das Turbinengehäuse.

Ferner zeigt die Figur 3 Gussaugen 15, die zur Stabilisierung des Kerns beim Gießvorgang benötigt werden. Der Kern füllt während des Gießens den im Turbinengehäuse vorgesehenen Kühlmantel aus und muss später wieder entfernt werden. Die Positionen der Gussaugen 15 sind abhängig vom Design und der Stabilität des Kühlmantels. Beim fertiggestellten Abgasturbolader sind die Gussaugen mit Blindstopfen verschlossen.

Die Figur 4 zeigt eine Skizze zur Veranschaulichung der Aufteilung des im Turbinengehäuse 11 vorgesehenen Kühlmantels in zwei Teilbereiche. Das dem Turbinengehäuse über seinen auf dessen Unterseite vorgesehenen Kühlmitteleingang 5 zugeführte Kühlmittel, bei dem es sich um Kühlwasser handelt, wird unter Verwendung von rohrförmigen Verbindungen 20 aufgeteilt in zwei Teilbereiche 23a und 23b eines Kühlmantels. Der erste Teilbereich 23a des Kühlmantels ist im Bereich der Spirale des Turbinengehäuses vorgesehen. Der zweite Teilbereich 23b des Kühlmantels ist im Bereich zwischen dem Turbinenrad und dem Abgasausgang vorgesehen, nämlich im sogenannten Abströmbereich des Turbinengehäuses. Die die Teilbereiche 23a und 23b verlassenden Kühlmittelströme werden unter Verwendung von weiteren rohrförmigen Verbindungen 20 wieder zusammengefasst und verlassen das Turbinengehäuse über dessen Kühlmittelausgang 6, der an der Oberseite des Turbinengehäuses vorgesehen ist.

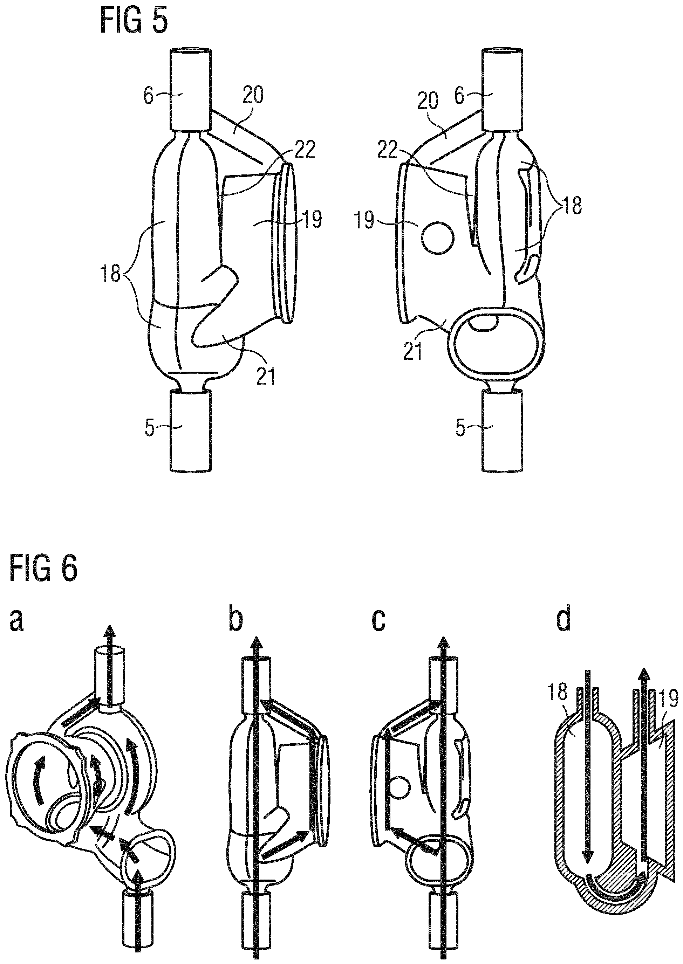

Die Figur 5 zeigt weitere Skizzen zur Veranschaulichung des zweigeteilten Kühlmantels eines Turbinengehäuses mit integrierten rohrförmigen Verbindungen zwischen den beiden Teilbereichen. Zu erkennen sind wiederum der auf der Unterseite angeordnete Kühlmitteleingang 5 und der auf der Oberseite vorgesehene Kühlmittelausgang 6. Die Hauptströmrichtung des Kühlmittels verläuft damit innerhalb des Turbinengehäuses wiederum von unten nach oben. Durch die Aufteilung des Kühlmantels in zwei Teilbereiche, nämlich einen im Spiralbereich 18 des Turbinengehäuses vorgesehenen ersten Teilbereich und einen im Abströmbereich 19 des Turbinenrades vorgesehenen zweiten Teilbereich wird die Komplexität der vom Kühlmittel durchströmten Gesamtgeometrie stark reduziert. Die Trennlinie 22 zwischen den beiden Teilbereichen verläuft in Umfangsrichtung direkt über der Position des Turbinenrades. Die Kühlmittelströmung innerhalb der beiden Teilbereiche ist in einfacher Weise kontrollierbar. Eine Entstehung von Rückströmgebieten mit stagnierendem Kühlmittelaustausch kann weitgehend ausgeschlossen werden. Durch die auf die beiden Teilbereiche oben aufgesetzten rohrförmigen Verbindungen 20 wird der Kühlmittelstrom wieder zusammengeführt. Durch diese rohrförmigen Verbindungen 20 in Verbindung mit dem auf der Oberseite des Turbinengehäuses angeordneten Kühlmittelausgang 6 wird die bereits genannte Entgasung des Abströmbereiches ermöglicht. Des Weiteren wird durch die genannten rohrförmigen Verbindungen der Gusskern, der beim Gießen den Hohlraum des späteren Kühlmantels ausfüllt, stabilisiert.

Beim gezeigten Ausführungsbeispiel erfolgt die Aufteilung des Kühlmittelstroms in die beiden Teilbereiche über den vorhandenen Wastegate-Kanal. Das Gesamtkonzept schließt es aber nicht aus, die Aufteilung des Kühlmittelstroms über eine weitere aufgesetzte rohrförmige Verbindung zu realisieren, falls dies erforderlich ist.

Durch die vorstehend beschriebene Aufspaltung der Kühlung des Turbinengehäuses in einzelne funktionale Komponenten mit reduzierter Komplexität wird der Auslegungs- und Designprozess insgesamt stark vereinfacht.
Unabhängig davon besteht die Möglichkeit, die Richtung der Kühlmittelströmung durch das Turbinengehäuse umzukehren, falls sich die Einbausituation des Abgasturboladers an der Brennkraftmaschine grundsätzlich verändert.
Die Figur 6 zeigt Skizzen zur Veranschaulichung von Kühlmittelstromführungsmöglichkeiten innerhalb des Turbinengehäuses. In den Figuren 6a, 6b und 6c ist veranschaulicht, dass die beiden Teilbereiche, nämlich der im Spiralbereich vorgesehene erste Teilbereich und der im Abströmbereich des Turbinenrades vorgesehene zweite Teilbereich, parallel zueinander angeordnet sind. Das beschriebene Konzept der Aufteilung des Kühlmantels des Turbinengehäuses in zwei Teilbereiche ist in vorteilhafter Weise bei Bedarf durch eine Veränderung der rohrförmigen Verbindungen auch im Sinne einer Reihenschaltung der beiden Teilbereiche realisierbar. Diese Ausführungsform ist nicht Teil der beanspruchten Erfindung. In diesem Falle kann sich eine U-förmige Durchströmung, wie es in der Figur 6b veranschaulicht ist, ergeben. Dort ist der Spiralbereich mit der Bezugszahl 18 und der Abströmbereich mit der Bezugszahl 19 bezeichnet.

## Patentansprüche

1. Abgasturbolader, der ein Turbinengehäuse, ein Lagergehäuse und ein Verdichtergehäuse aufweist, wobei das Turbinengehäuse einen Kühlmitteleingang, einen im Inneren des Turbinengehäuses angeordneten Kühlmantel und einen Kühlmittelausgang aufweist und der Kühlmantel in zwei Teilbereiche aufgeteilt ist, **dadurch gekennzeichnet, dass** der Kühlmitteleingang (5) auf der Unterseite des Turbinengehäuses (11) angeordnet ist, der Kühlmittelausgang (6) auf der Oberseite des Turbinengehäuses (11) angeordnet ist, dem Turbinengehäuse über seinen Kühlmitteleingang (5) zugeführtes Kühlmittel unter Verwendung von rohrförmigen Verbindungen (20) auf die beiden Teilbereiche (23a,23b) aufgeteilt wird und die die Teilbereiche (23a,23b) verlassenden Kühlmittelströme unter Verwendung von weiteren rohrförmigen Verbindungen (20) wieder zusammengefasst und dem Kühlmittelausgang (6) zugeführt werden.

2. Abgasturbolader nach Anspruch 1, **dadurch gekennzeichnet, dass** im Turbinengehäuse (11) eine Spirale und ein Turbinenrad angeordnet sind und der erste Teilbereich (23a) des Kühlmantels im Spiralbereich (18) vorgesehen ist.

3. Abgasturbolader nach einem der vorhergehenden Ansprüche, **dadurch gekennzeichnet, dass** im Turbinengehäuse (11) eine Spirale und ein Turbinenrad angeordnet sind und der zweite Teilbereich (23b)des Kühlmantels im Abströmbereich (19) des Turbinengehäuses vorgesehen ist.

4. Abgasturbolader nach einem der vorhergehenden Ansprüche, **dadurch gekennzeichnet, dass** innerhalb des Turbinengehäuses (11) eine Abzweigung vorgesehen ist, an welcher dem Turbinengehäuse zugeführtes Kühlmittel abzweigbar ist, und dass zwischen dem Turbinengehäuse (11) und dem Lagergehäuse (10) ein erster Schlauch (7) vorgesehen ist, durch welchen das abgezweigte Kühlmittel dem Lagergehäuse (10) zuführbar ist.

5. Abgasturbolader nach Anspruch 4, **dadurch gekennzeichnet, dass** zwischen dem Lagergehäuse (10) und dem Turbinengehäuse (11) ein zweiter Schlauch (8) vorgesehen ist, durch welchen Kühlmittel vom Lagergehäuse (10) zum Turbinengehäuse (11) rückleitbar ist.

6. Abgasturbolader nach einem der vorhergehenden Ansprüche, **dadurch gekennzeichnet, dass** eine der rohrförmigen Verbindungen (20) in einem Wastegate-Kanal (12) des Abgasturboladers verläuft.

7. Abgasturbolader nach einem der vorhergehenden Ansprüche, **dadurch gekennzeichnet, dass** die beiden Teilbereiche (23a,23b) parallel zueinander angeordnet sind.

## Claims

1. Exhaust-gas turbocharger which has a turbine housing, a bearing housing and a compressor housing, wherein the turbine housing has a coolant inlet, a cooling jacket arranged in the interior of the turbine housing, and a coolant outlet, and the cooling jacket is divided into two subregions, **characterized in that** the coolant inlet (5) is arranged on the underside of the turbine housing (11), the coolant outlet (6) is arranged on the top side of the turbine housing (11), coolant supplied to the turbine housing via its coolant inlet (5) is divided between the two subregions (23a, 23b) by means of tubular connections (20) and the coolant flows exiting the subregions (23a, 23b) are merged again using further tubular connections (20) and supplied to the coolant outlet (6).

2. Exhaust-gas turbocharger according to Claim 1, **characterized in that** a spiral and a turbine wheel are arranged in the turbine housing (11), and the first subregion (23a) of the cooling jacket is provided in the spiral region (18).

3. Exhaust-gas turbocharger according to either of the preceding claims, **characterized in that** a spiral and a turbine wheel are arranged in the turbine housing (11), and the second subregion (23b) of the cooling jacket is provided in the outflow region (19) of the turbine housing.

4. Exhaust-gas turbocharger according to one of the preceding claims, **characterized in that**, within the turbine housing (11), a branch is provided at which coolant supplied to the turbine housing can be branched off, and **in that**, between the turbine housing (11) and the bearing housing (10), there is provided a first hose (7) through which the branched-off coolant can be supplied to the bearing housing (10).

5. Exhaust-gas turbocharger according to Claim 4, **characterized in that**, between the bearing housing (10) and the turbine housing (11), there is provided a second hose (8) through which coolant can be conducted back from the bearing housing (10) to the turbine housing (11).

6. Exhaust-gas turbocharger according to one of the preceding claims, **characterized in that** one of the tubular connections (20) runs in a wastegate duct (12) of the exhaust-gas turbocharger.

7. Exhaust-gas turbocharger according to one of the preceding claims, **characterized in that** the two subregions (23a, 23b) are arranged parallel to one another.

## Revendications

1. Turbocompresseur à gaz d'échappement, qui présente un boîtier de turbine, un logement de palier et un boîtier de compresseur, le boîtier de turbine présentant une entrée de réfrigérant, une enveloppe de refroidissement disposée à l'intérieur du boîtier de turbine et une sortie de réfrigérant et l'enveloppe de refroidissement étant divisée en deux régions partielles, **caractérisé en ce que** l'entrée de réfrigérant (5) est disposée sur le côté inférieur du boîtier de turbine (11), la sortie de réfrigérant (6) est disposée sur le côté supérieur du boîtier de turbine (11), du réfrigérant acheminé au boîtier de turbine par le biais de son entrée de réfrigérant (5), est réparti en utilisant des connexions tubulaires (20) sur les deux régions partielles (23a, 23b) et les flux de réfrigérant quittant les régions partielles (23a, 23b) sont à nouveau réunis en utilisant des connexions tubulaires supplémentaires (20) et sont acheminés à la sortie de réfrigérant (6).

2. Turbocompresseur à gaz d'échappement selon la revendication 1, **caractérisé en ce qu'**une spirale et une roue de turbine sont disposées dans le boîtier de turbine (11) et la première région partielle (23a) de l'enveloppe de refroidissement est prévue dans la région spirale (18).

3. Turbocompresseur à gaz d'échappement selon l'une quelconque des revendications précédentes, **caractérisé en ce qu'**une spirale et une roue de turbine sont disposées dans le boîtier de turbine (11) et la deuxième région partielle (23b) de l'enveloppe de refroidissement est prévue dans la région de sortie de l'écoulement (19) du boîtier de turbine.

4. Turbocompresseur à gaz d'échappement selon l'une quelconque des revendications précédentes, **caractérisé en ce qu'**à l'intérieur du boîtier de turbine (11) est prévue une ramification au niveau de laquelle du réfrigérant peut être dérivé vers le boîtier de turbine, et **en ce qu'**entre le boîtier de turbine (11) et le logement de palier (10) est prévu un premier tuyau (7) à travers lequel le réfrigérant dérivé peut être acheminé au logement de palier (10).

5. Turbocompresseur à gaz d'échappement selon la revendication 4, **caractérisé en ce qu'**entre le logement de palier (10) et le boîtier de turbine (11) est prévu un deuxième tuyau (8) à travers lequel du réfrigérant peut être refoulé depuis le logement de palier (10) vers le boîtier de turbine (11).

6. Turbocompresseur à gaz d'échappement selon l'une quelconque des revendications précédentes, **caractérisé en ce que** l'une des connexions tubulaires (20) s'étend dans un canal d'évacuation (12) du turbocompresseur à gaz d'échappement.

7. Turbocompresseur à gaz d'échappement selon l'une quelconque des revendications précédentes, **caractérisé en ce que** les deux régions partielles (23a, 23b) sont disposées parallèlement l'une à l'autre.
